(19) **Europäisches Patentamt / European Patent Office / Office européen des brevets**

(11) **EP 3 009 985 A1**

(12) **EUROPEAN PATENT APPLICATION**
published in accordance with Art. 153(4) EPC

(43) Date of publication:
**20.04.2016 Bulletin 2016/16**

(51) Int Cl.:
**G06T 7/00** (2006.01)

(21) Application number: **14810909.3**

(22) Date of filing: **28.05.2014**

(86) International application number:
**PCT/JP2014/064066**

(87) International publication number:
**WO 2014/199824 (18.12.2014 Gazette 2014/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.06.2013 JP 2013124439**

(71) Applicant: **Konica Minolta, Inc.**
**Tokyo 100-7015 (JP)**

(72) Inventor: **SUMITOMO, Hironori**
**Tokyo 100-7015 (JP)**

(74) Representative: **Hoffmann Eitle**
**Patent- und Rechtsanwälte PartmbB**
**Arabellastraße 30**
**81925 München (DE)**

(54) **IMAGE PROCESSING METHOD, IMAGE PROCESSING DEVICE, AND IMAGE PROCESSING PROGRAM**

(57) An image processing method includes the steps of obtaining information on periodicity in a direction of rotation of at least one of a template image and an image to be searched, carrying out first matching in respect to the direction of rotation between the template image and the image to be searched and determining a plurality of candidates for an amount of rotation for correcting relative displacement in direction of rotation between the template image and the image to be searched based on a result of first matching and the information on periodicity, generating a plurality of sets of images resulting from correction of relative displacement in direction of rotation between the template image and the image to be searched with each of the candidates for the amount of rotation, and carrying out second matching in respect to a position in each of the sets of images and outputting a result relatively high in likelihood, among results of second matching.

FIG.4

## Description

### TECHNICAL FIELD

The present invention relates to an image processing method, an image processing apparatus, and an image processing program relating to template matching using a template image.

### BACKGROUND ART

A technique for detecting, by using a template image registered in advance (template matching), a position corresponding to the template image in an image to be searched has been put into practical use. Phase-only correlation (hereinafter also referred to as "POC") is often used as one technique for template matching. POC is a technique for searching for corresponding points between images with the use of phase difference information of a spatial frequency included in the images. Robustness against variation in illumination environment can be enhanced by using phase difference information.

General POC is on the premise that there is no change in direction of rotation between a template image and an image to be searched. Therefore, when an object registered in advance as a template image has rotated in the image to be searched, a position cannot accurately be detected. Such displacement by rotation around an optical axis (change in direction of rotation), if any, can be addressed by adopting rotation invariant phase only correlation (hereinafter also referred to as "RIPOC") as a technique which is an expanded version of POC.

In RIPOC, initially, by making use of amplitude information included in a template image and an image to be searched, an amount of rotation (displacement by rotation) between the images is estimated and any one of the template image and the image to be searched is corrected with the estimated amount of rotation. In succession, corresponding positions are detected by making use of the corrected template image or image to be searched. Through such processing in two steps, even when an object of interest may rotate, corresponding positions can accurately be detected.

For example, Japanese Laid-Open Patent Publication No. 10-124667 (PTD 1) discloses a pattern collation apparatus making use of RIPOC. This pattern collation apparatus estimates an amount of rotation from an image resulting from polar coordinate conversion of amplitude information and estimates a position after a template image is corrected.

Japanese Laid-Open Patent Publication No. 10-206134 (PTD 2) discloses a position detection method through image processing for finding an angle of rotation of a graphic in a given input image from a reference position set in the image. According to this position detection method, an image to be searched is matched with a template rotated at a plurality of angles of rotation, and an angle of rotation and a position of an object are estimated based on a template highest in similarity and a position found in the template.

### CITATION LIST

### PATENT DOCUMENT

PTD 1: Japanese Laid-Open Patent Publication No. 10-124667
PTD 2: Japanese Laid-Open Patent Publication No. 10-206134

### SUMMARY OF INVENTION

### TECHNICAL PROBLEM

RIPOC disclosed in PTD 1 described above has high robustness also against fluctuation in direction of rotation. When estimation of an amount of rotation (displacement by rotation) between images in a preceding stage fails, an image cannot appropriately be corrected and hence position detection in a subsequent stage does not function well. For example, since accurate estimation of an amount of rotation (displacement by rotation) for an image having periodicity in a direction of rotation is not ensured, a position may not correctly be detected in the subsequent stage. With the position detection method disclosed in PTD 2 described above, since matching should be carried out for all of the plurality of angles of rotation, a large amount of operation time is required.

An object of the present invention is to provide an image processing method, an image processing apparatus, and an image processing program achieving higher robustness and higher speed in processing in template matching using a template image.

### SOLUTION TO PROBLEM

According to one aspect of the present invention, an image processing method of carrying out template matching with an image to be searched by using a template image is provided. The image processing method includes the steps of obtaining information on periodicity in a direction of rotation, of at least one of the template image and the image to be searched, carrying out first matching in respect to the direction of rotation between the template image and the image to be searched and determining a plurality of candidates for an amount of rotation for correcting relative displacement in direction of rotation between the template image and the image to be searched based on a result of the first matching and the information on the periodicity, generating a plurality of sets of images resulting from correction of relative displacement in the direction of rotation between the template image and the image to be searched with each of the candidates for the amount of rotation, and carrying out second matching in respect to a position in each of the sets of the images and outputting a result relatively high in likelihood among results of the second matching.

Preferably, the step of determining the plurality of candidates for an amount of rotation includes the step of limiting a range in which the amount of rotation is searched for, based on the information on the periodicity.

Further preferably, the step of limiting the range in which the amount of rotation is searched for includes the step of generating information on similarity in the range in which the amount of rotation is searched for, by correcting relation between the amount of rotation and the similarity in the range in which the amount of rotation is searched for with relation between an amount of rotation and similarity out of the range in which the amount of rotation is searched for.

Preferably, the step of determining the plurality of candidates for an amount of rotation includes the step of determining candidates for the amount of rotation by adding and/or subtracting an amount of rotation representing the information on the periodicity to and/or from an amount of rotation determined in the first matching.

Preferably, the step of determining the plurality of candidates for an amount of rotation includes the step of excluding a candidate failing to satisfy a condition for the information on the periodicity from the candidates for the amount of rotation, by referring to characteristics of change in similarity between the template image and the image to be searched, with respect to the amount of rotation.

Preferably, the step of obtaining information on periodicity includes the step of accepting the information on the periodicity specified by a user when the template image is generated.

Preferably, the step of obtaining information on periodicity includes the steps of carrying out third matching in respect to the direction of rotation between the template images and determining periodicity based on a period of similarity which appears in a result of the third matching.

Preferably, the step of obtaining information on periodicity includes the step of accepting information on any periodicity from a user.

According to another aspect of the present invention, an image processing apparatus carrying out template matching with an image to be searched by using a template image is provided. The image processing apparatus includes a period information obtaining portion that obtains information on periodicity in a direction of rotation, of at least one of the template image and the image to be searched, a rotation amount estimation portion that carries out first matching in respect to the direction of rotation between the template image and the image to be searched and determines a plurality of candidates for an amount of rotation for correcting relative displacement in direction of rotation between the template image and the image to be searched based on a result of the first matching and the information on the periodicity,

an image correction portion that generates a plurality of sets of images resulting from correction of relative displacement in the direction of rotation between the template image and the image to be searched with each of the candidates for the amount of rotation, and a position detection portion that carries out second matching in respect to a position in each of the sets of the images and outputs a result relatively high in likelihood among results of the second matching.

According to yet another aspect of the present invention, an image processing program carrying out template matching with an image to be searched by using a template image is provided. The image processing program causes a computer to perform the steps of obtaining information on periodicity in a direction of rotation, of at least one of the template image and the image to be searched, carrying out first matching in respect to the direction of rotation between the template image and the image to be searched and determining a plurality of candidates for an amount of rotation for correcting relative displacement in direction of rotation between the template image and the image to be searched based on a result of the first matching and the information on the periodicity, generating a plurality of sets of images resulting from correction of relative displacement in the direction of rotation between the template image and the image to be searched with each of the candidates for the amount of rotation, and carrying out second matching in respect to a position in each of the sets of the images and outputting a result relatively high in likelihood among results of the second matching.

ADVANTAGEOUS EFFECTS OF INVENTION

According to the present invention, robustness can be enhanced and processing can be faster in template matching using a template image.

BRIEF DESCRIPTION OF DRAWINGS

Fig. 1 is a schematic diagram showing an application of template matching according to the present embodiment.
Fig. 2 is a block diagram showing a configuration when template matching according to the present embodiment is implemented by a personal computer.
Fig. 3 is a schematic diagram showing a functional configuration of an image processing apparatus according to a first embodiment.
Fig. 4 is a schematic diagram illustrating overview of rotation correction processing by a rotation correction portion of the image processing apparatus according to the first embodiment.
Fig. 5 is a more detailed functional block diagram of a rotation amount estimation portion of the image processing apparatus according to the first embodiment.

Fig. 6 is a schematic diagram showing an algorithm in POC.

Fig. 7 is a diagram showing one example of a POC value calculated in accordance with general POC shown in Fig. 6.

Fig. 8 is a diagram showing an exemplary result of the rotation correction processing by the rotation correction portion of the image processing apparatus according to the first embodiment.

Fig. 9 is a flowchart showing an overall procedure in position detection processing according to the first embodiment.

Fig. 10 is a diagram for illustrating processing in estimating an amount of rotation according to a second embodiment.

Fig. 11 is a diagram showing one example of variation in POC value with respect to an amount of rotation produced when an image contains a noise component.

Fig. 12 is a diagram for illustrating processing for estimating an amount of rotation according to a third embodiment.

Fig. 13 is a schematic diagram showing a functional configuration of an image processing apparatus according to a fifth embodiment.

Fig. 14 is a more detailed functional block diagram of a rotation amount estimation portion and a period information calculation portion of the image processing apparatus according to a third processing example in the fifth embodiment.

Fig. 15 is a diagram for illustrating processing for estimating an amount of rotation according to a seventh embodiment.

DESCRIPTION OF EMBODIMENTS

An embodiment of the present invention will be described in detail with reference to the drawings. The same or corresponding elements in the drawings have the same reference characters allotted and description thereof will not be repeated.

[A. Overview]

According to the present embodiment, an image processing method, an image processing apparatus, and an image processing program for template matching with an image to be searched by using a template image are provided. Through this processing, information on periodicity in a direction of rotation, of at least one of the template image and the image to be searched, is obtained. In addition, first matching in respect to a direction of rotation between the template image and the image to be searched is carried out. Namely, relative displacement in direction of rotation (amount of rotation) between images is estimated.

Then, based on a result of first matching and information on periodicity, a plurality of candidates for an amount of rotation for correcting relative displacement in direction of rotation between the template image and the image to be searched are determined. Then, a plurality of sets of images resulting from correction of relative displacement in direction of rotation between the template image and the image to be searched with each of the candidates for the amount of rotation are generated, and second matching in respect to a position is carried out in each of the sets of images. Namely, a plurality of candidates for correction of the amount of rotation are prepared, and position search is carried out for each candidate. Then, a result relatively high in likelihood among results of second matching is output as a final result.

[B. System Configuration]

A mount example of an image processing apparatus having a template matching function with the use of a template image according to the present embodiment will initially be described.

<<b1: Application>>

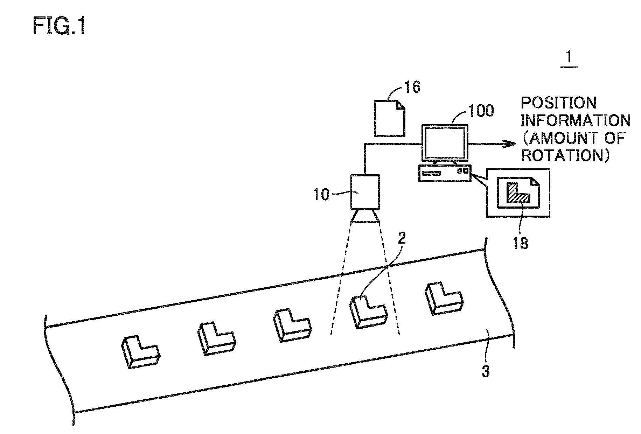

Fig. 1 is a schematic diagram showing an application of template matching according to the present embodiment. Referring to Fig. 1, a system 1 according to the present embodiment is applied to a production line including a belt conveyor 3 by way of example. In system 1, workpieces 2 are successively transported over belt conveyor 3 and images (hereinafter also referred to as an "image to be searched 16") including appearance of workpieces 2 (hereinafter also referred to as "objects") are obtained by photographing workpieces 2 with a camera 10.

Image to be searched 16 is transmitted to an image processing apparatus 100. Image processing apparatus 100 detects a position of workpiece 2 included in image to be searched 16 with the use of a template image 18 registered in advance. Image processing apparatus 100 outputs information on a position which includes an amount of rotation and a magnification, which is obtained through this template matching.

<<b2: Implementation with Personal Computer>>

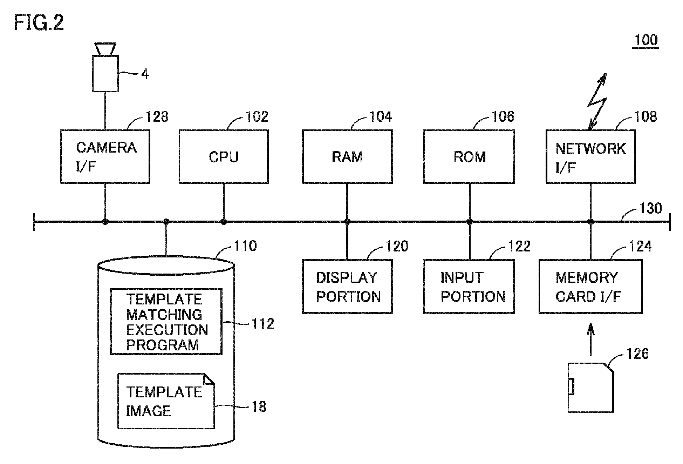

Fig. 2 is a block diagram showing a configuration when template matching according to the present embodiment is implemented by a personal computer. Referring to Fig. 2, image processing apparatus 100 implemented by a personal computer is mainly mounted on a computer having a general-purpose architecture. Image processing apparatus 100 includes, as main components, a CPU (Central Processing Unit) 102, a RAM (Random Access Memory) 104, a ROM (Read Only Memory) 106, a network interface (I/F) 108, a hard disk 110, a display portion 120, an input portion 122, a memory card interface (I/F) 124, and a camera interface (I/F) 128. The components are connected through a bus 130 so as to be able to communicate with one another.

CPU 102 controls entire image processing apparatus 100 by executing an operating system (OS) or various programs such as a template matching execution program 112 stored in ROM 106 or hard disk 110. RAM 104 functions as a working memory for CPU 102 to execute various programs. ROM 106 stores an initial program (a boot program) executed at the time of boot in image processing apparatus 100.

Network interface 108 exchanges data with other apparatuses (server apparatuses) through various communication media. More specifically, network interface 108 communicates data through wired circuits such as Ethernet® (LAN (Local Area Network) or WAN (Wide Area Network)) and/or wireless circuits such as wireless LAN.

Hard disk 110 stores an image processing program (mainly template matching execution program 112) for implementing various types of processing according to the present embodiment and template image 18. Hard disk 110 may further store a program such as an operating system.

Display portion 120 displays a GUI (Graphical User Interface) picture provided by an operating system and an image generated as a result of execution of template matching execution program 112. Input portion 122 is typically implemented by a keyboard, a mouse, or a touch panel, and outputs contents of an instruction accepted from a user to CPU 102.

Memory card interface 124 reads and write data from and to various memory cards (non-volatile recording media) 126 such as an SD (Secure Digital) card or a CF (CompactFlash®) card. Camera interface 128 takes in from camera 10, an image for generating image to be searched 16, which is obtained by photographing a subject. Camera 10 functions as image obtaining means for obtaining an image. A main body of image processing apparatus 100 does not have to have a function to photograph a subject. In this case, typically, necessary images are taken in through memory card 126 storing various images obtained with some apparatus. Namely, memory card 126 is attached to memory card interface 124, and various images read from memory card 126 are stored (copied) in hard disk 110.

Template matching execution program 112 stored in hard disk 110 is distributed as being stored in such a recording medium as a CD-ROM (Compact Disk-Read Only Memory) or distributed from a server apparatus through a network. Template matching execution program 112 implements processing by invoking at prescribed timing and in a prescribed order, necessary modules among program modules provided as a part of an operating system executed in image processing apparatus 100 (a personal computer). In this case, template matching execution program 112 itself does not contain a module provided by an operating system but instead implements image processing in cooperation with the operating system. Template matching execution program 112 is not a stand-alone program but may be provided as being incorporated in a part of some program. In such a case as well, the program itself does not contain a module as made use of commonly to other programs, but instead implements image processing in cooperation with other programs. Even such a template matching execution program 112 not containing some modules does not depart from the spirit of image processing apparatus 100 according to the present embodiment.

Functions provided by template matching execution program 112 may be implemented in part or in the entirety by dedicated hardware.

«b3: Implementation With Other Features»

In addition to the implementation with the personal computer described above, for example, mount on a digital camera, a portable telephone, or a smartphone is applicable. In addition, a form like what is called cloud service in which at least one server apparatus performs the processing according to the present embodiment may be applicable. In this case, such a configuration that a user uses his/her own terminal (such as a personal computer or a smartphone) to transmit at least two images to be processed to a server apparatus (on a cloud side) and the server apparatus subjects the transmitted images to be processed to image processing according to the present embodiment is assumed. The server apparatus does not have to perform all functions (processing) but a terminal on a user side and a server apparatus may cooperate with each other to perform image processing according to the present embodiment.

[C. First Embodiment]

<<c1: Overall Configuration>>

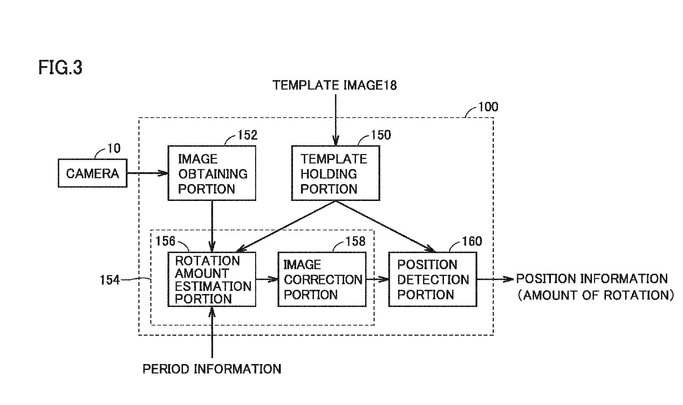

Fig. 3 is a schematic diagram showing a functional configuration of image processing apparatus 100 according to a first embodiment. Referring to Fig. 3, image processing apparatus 100 according to the first embodiment estimates change in direction of rotation (amount of rotation) between template image 18 and image to be searched 16 and corrects at least one of template image 18 and image to be searched 16. Image processing apparatus 100 corrects this change in direction of rotation and detects corresponding positions between the images through processing for matching between the images. For the sake of convenience of description, processing for correction by rotation by rotating image to be searched 16 will be exemplified in the description below. Template image 18 may naturally be corrected by rotation.

More specifically, image processing apparatus 100 includes, as its functional configuration, a template holding portion 150, an image obtaining portion 152, a rotation correction portion 154, and a position detection portion 160.

Template holding portion 150 holds template image 18 prepared in advance. Template holding portion 150 registers in advance template image 18. Template image 18 is created and/or set arbitrarily by a user in accordance with a purpose of template matching. Template image 18 prepared in advance by a user is obtained by image processing apparatus 100 through any recording medium or communication medium, that is, read through file input, and held in template holding portion 150. Template image 18 may naturally be created by using the entirety or a part of an image photographed by camera 10. Template image 18 held in template holding portion 150 is used in rotation amount estimation processing and position detection processing which will be described later.

Image obtaining portion 152 obtains with any method, image to be searched 16, which is to be subjected to template matching. Typically, image obtaining portion 152 obtains image to be searched 16 generated as camera 10 photographs a subject. Naturally, a method of obtaining image to be searched 16 is not limited to a method of input through camera 10, and image to be searched 16 photographed in advance may be obtained through any recording medium or communication medium, that is, through file input.

One image to be searched 16 or a plurality of images to be searched 16 which have successively been photographed may be obtained. As a method of coordination with camera 10, camera 10 obtains images in a prescribed cycle (takes in moving images) and the successively obtained images are primarily saved in a frame buffer. There is also a case that, as some kind of trigger (release by a user, automatic photographing after lapse of a prescribed period of time, or a trigger originating from other recognition processing) occurs, a corresponding image among images saved in the frame buffer is obtained and processed.

Rotation correction portion 154 estimates a relative amount of rotation between template image 18 and image to be searched 16 and corrects by rotation at least one of template image 18 and image to be searched 16 with the estimated relative amount of rotation. As described above, image processing apparatus 100 according to the first embodiment corrects by rotation image to be searched 16. More specifically, rotation correction portion 154 includes a rotation amount estimation portion 156 and an image correction portion 158.

Rotation amount estimation portion 156 estimates displacement in relative amount of rotation between template image 18 and image to be searched 16 and estimates a plurality of candidates for an amount of displacement in direction of rotation between the images. Namely, rotation amount estimation portion 156 carries out matching (first matching) in respect to the direction of rotation between template image 18 and image to be searched 16, and determines a plurality of candidates for the amount of rotation for correcting relative displacement in direction of rotation between template image 18 and image to be searched 16 based on a result of matching (first matching) in respect to the direction of rotation and information on periodicity. Though various methods can be adopted for a logic for estimating this relative amount of rotation, an amount of rotation is estimated with POC in the present embodiment.

Image correction portion 158 corrects template image 18 or image to be searched 16 based on a plurality of amounts of rotation estimated by rotation amount estimation portion 156, and generates a plurality of corrected images (in the description below, image to be searched 16 is corrected by rotation). Namely, image correction portion 158 generates a plurality of sets of images resulting from correction of relative displacement in direction of rotation between template image 18 and image to be searched 16 with each of the candidates for the amount of rotation.

Correction by rotation is achieved by relatively rotating one image with affine transformation. Though affine transformation includes interpolation processing, a known interpolation method such as a bi-linear method or a cubic convolution method can be adopted for this interpolation processing.

Details of rotation correction processing by rotation correction portion 154 will be described later.

Position detection portion 160 performs processing for detecting corresponding positions by using each corrected image generated through correction by rotation. Namely, position detection portion 160 performs position detection processing (second matching) in respect to a position in each of the sets of images generated by image correction portion 158 and outputs a result relatively high in likelihood among results of the position detection processing.

Though various methods can be adopted for a logic for position detection, position detection with POC is adopted in the present embodiment. In the present embodiment, a plurality of amounts of rotation are estimated as candidates by making use of period information, and a position is detected for each candidate for the amount of rotation. Position detection portion 160 outputs a most likely result as final position information. Details of the position detection processing by this position detection portion 160 will be described later.

«c2: Rotation Correction Processing»

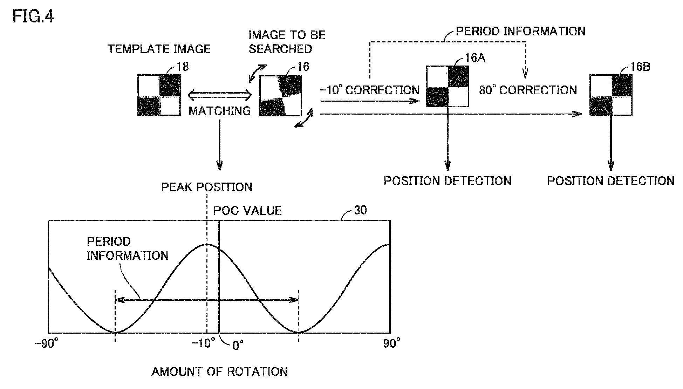

Details of the rotation correction processing described above will now be described. Fig. 4 is a schematic diagram illustrating overview of the rotation correction processing by rotation correction portion 154 of image processing apparatus 100 according to the first embodiment.

In the present embodiment, a plurality of candidates for the amount of rotation to be used for the rotation correction processing are estimated, with attention being paid to periodicity in a direction of rotation of template image 18. Robustness in position detection is enhanced by performing position detection processing in a subsequent stage by using each of the plurality of estimated amounts of rotation.

Referring to Fig. 4, initially, displacement in relative amount of rotation between template image 18 and image to be searched 16 is detected. Specifically, similarity between the images is calculated by successively changing a relative amount of rotation between template image 18 and image to be searched 16. Namely, matching processing in respect to the direction of rotation between template image 18 and image to be searched 16 is performed. Though any technique can be adopted for this matching processing, POC is adopted in the present embodiment. When POC is adopted, a POC value is calculated as a similarity.

For example, between template image 18 and image to be searched 16 as shown in Fig. 4, a POC value as shown with a reference character 30 is calculated in accordance with an amount of rotation of image to be searched 16. Namely, a checkered object as shown with template image 18 and image to be searched 16 has periodicity, and a peak appears in a period of 90° also in a POC value (similarity).

Then, when a peak appears in characteristics of the POC value as shown with reference character 30, an angle corresponding to that peak position is determined as one of candidates for an amount of rotation for correction, and other one or more candidates for the amount of rotation are determined by correcting the determined candidate for the amount of rotation based on period information. Here, period information refers to information on periodicity in a direction of rotation, of at least one of template image 18 and image to be searched 16. Details of a method of obtaining period information will be described later.

More specifically, period information is obtained in advance, and an amount of rotation θ± (an amount of rotation in accordance with period information) is determined as a candidate for correction by rotation, in addition to an amount of rotation θ exhibiting the highest peak. For example, when period information is 90° and amount of rotation θ exhibiting the highest peak is -10°, two in total including amount of rotation θ=80° (-10°+90°=80°) in addition to amount of rotation θ=-10° are output as results of estimation. Then, corrected images 16A and 16B are generated by correcting image to be searched 16 in accordance with the results of estimation. Position detection processing in the subsequent stage is performed with these corrected images 16A and 16B. Namely, processing for generating a plurality of sets of images includes processing for determining a candidate for an amount of rotation by adding and/or subtracting an amount of rotation representing information on periodicity to and/or from the amount of rotation determined in matching (first matching) in respect to the direction of rotation.

For a result of estimation of the amount of rotation, amount of rotation θ=-100° (-10°-90° = -100°) can be a candidate. When POC is used, however, only a range from -90° to 90° can be detected, and hence amount of rotation θ=-100° is excluded as being out of the scope of specifications.

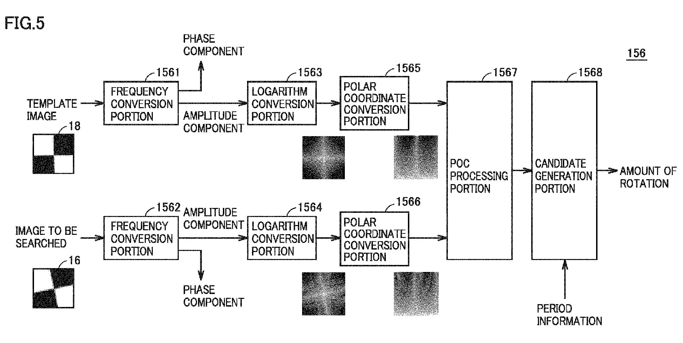

Fig. 5 is a more detailed functional block diagram of rotation amount estimation portion 156 of image processing apparatus 100 according to the first embodiment. Referring to Fig. 5, rotation amount estimation portion 156 includes, as its functional configuration, frequency conversion portions 1561 and 1562, logarithm conversion portions 1563 and 1564, polar coordinate conversion portions 1565 and 1566, a POC processing portion 1567, and a candidate generation portion 1568.

Frequency conversion portions 1561 and 1562 calculate frequency components (an amplitude component and a phase component) included in respective template image 18 and image to be searched 16. In processing for estimating an amount of rotation, not a phase component but an amplitude component is employed. Here, template image 18 and image to be searched 16 are the same in size.

Logarithm conversion portion 1563 and polar coordinate conversion portion 1565 convert an amplitude component of template image 18 into a logarithm and into a polar coordinate image. Similarly, logarithm conversion portion 1564 and polar coordinate conversion portion 1566 convert an amplitude component of image to be searched 16 into a logarithm and into a polar coordinate image. As a result of conversion into such a polar coordinate image, an amount of rotation is expressed as a coordinate point on a two-dimensional coordinate. Here, a coordinate in a horizontal direction of the polar coordinate image corresponds to an amount of rotation.

POC processing portion 1567 calculates a similarity and an amount of parallel translation (corresponding to an amount of rotation) between polar coordinate images output from respective polar coordinate conversion portions 1565 and 1566. The similarity calculated by POC processing portion 1567 is also referred to as a correlation value or a POC value.

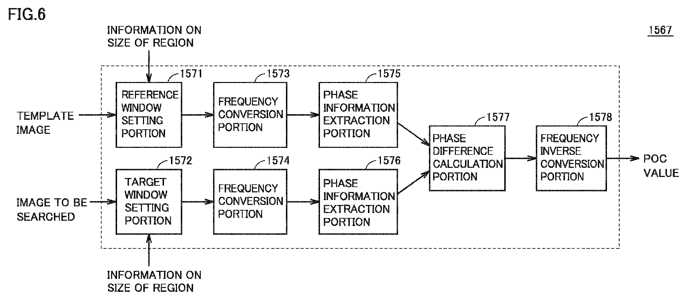

Fig. 6 is a schematic diagram showing an algorithm in POC. Referring to Fig. 6, POC processing portion 1567 includes a reference window setting portion 1571, a target window setting portion 1572, frequency conversion portions 1573 and 1574, phase information extraction portions 1575 and 1576, a phase difference calculation portion 1577, and a frequency inverse conversion portion 1578.

Reference window setting portion 1571 and target window setting portion 1572 set windows for a template image (an image resulting from polar coordinate conversion) and an image to be searched (an image resulting from polar coordinate conversion), respectively.

Frequency conversion portion 1573 subjects a reference window set on the template image to frequency conversion (typically, Fourier transform) to thereby convert image information included therein into information in a frequency space. Similarly, frequency conversion portion 1573 subjects a target window set on the image to be searched to frequency conversion (typically, Fourier transform) to thereby convert image information included therein into information in a frequency space. The resultant information in the frequency space includes amplitude information and phase information for each frequency. Namely, frequency conversion portions 1573 and 1574 subject partial images included in respective windows to frequency decomposition.

For example, when a window has a size of NxM, the entire domain of frequencies in the horizontal direction is expressed by a DC component and AC components having frequencies F1 to Fx_max = (N-1)/2 (N representing a size expressed with an odd number) and the entire domain of frequencies in the vertical direction is expressed by a DC component and frequencies F1 to Fy_max = (M-1)/2 (M representing a size expressed with an odd number). Though there are actually N or M AC components, they have information symmetrical with respect to the DC component and hence there are only Fx_max x Fy_max pieces of significant information.

A result of computation of general frequency conversion is output in a form of a complex number including a real part and an imaginary part. Typically, frequency conversion is carried out in accordance with an expression (1).

$$F(u,v) = \sum_{x,y} f(x,y) W_{N1}^{ux} W_{N2}^{vy}$$

$$\dots (1)$$

$$W_N = e^{-j\frac{2\pi}{N}}$$

where $N_1$ and $N_2$ each represent a window size.

Namely, frequency information is output in the form of a complex number including a real part Re(u, v) and an imaginary part Im(u, v). With the use of values for the real part and the imaginary part, conversion into amplitude information A(u, v) and phase information θ(u, v) can be achieved.

A relational expression between the amplitude information and the phase information, and an expression in a complex number including a real part and an imaginary part is as shown in an expression (2).

$$A(u,v) = \sqrt{\text{Re}(u,v)^2 + \text{Im}(u,v)^2}$$

$$\dots (2)$$

$$\theta(u,v) = \tan^{-1}\left(\frac{\text{Im}(u,v)}{\text{Re}(u,v)}\right)$$

A result of frequency conversion may be saved in a form of an amplitude and a phase as being combined or in a form of a real part and an imaginary part as being combined.

Phase information extraction portions 1575 and 1576 extract phase information on the respective reference window and target window with the use of results of frequency conversion (typically, in the form of a complex number) output from respective frequency conversion portions 1573 and 1574.

Phase difference calculation portion 1577 calculates a difference in phase information between the windows extracted by respective phase information extraction portions 1575 and 1576.

Frequency inverse conversion portion 1578 subjects the phase difference information calculated by phase difference calculation portion 1577 to frequency inverse conversion, to thereby calculate a POC value representing a similarity between the partial images included in the respective set windows. This processing for calculating the POC value is repeatedly performed each time target window setting portion 1572 updates a position of the target window set on the template image.

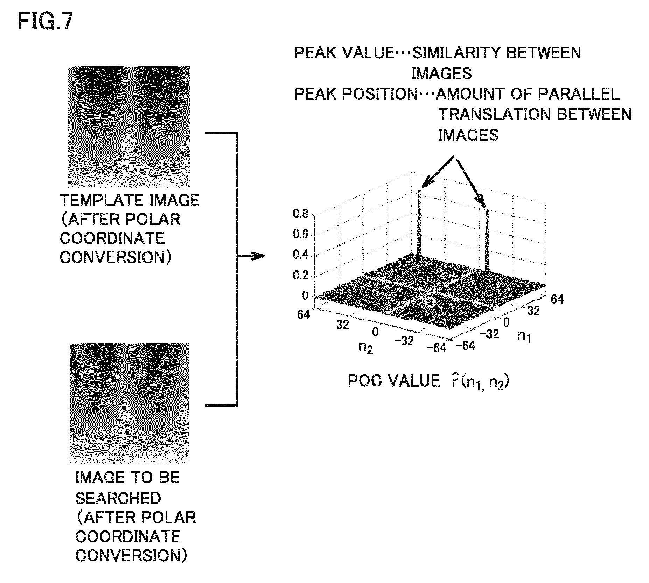

Fig. 7 is a diagram showing one example of a POC value calculated in accordance with general POC shown in Fig. 6. Fig. 7 shows one example of a result of calculation of a POC value obtained from template image 18 and image to be searched 16 shown in Fig. 4. Two peaks appear in results of calculation shown in Fig. 7. This originates from the fact that template image 18 and image to be searched 16 shown in Fig. 4 are checkered objects. Namely, amplitude components included in respective template image 18 and image to be searched 16 are in a cross-shape as shown in Fig. 7. Thus, in terms of a phase component, amounts of rotation θ and θ±90° cannot be distinguished from each other, and consequently a plurality of peaks appear also in a POC value (correlation value) calculated with POC.

Though amounts of rotation θ and θ+180° cannot be distinguished from each other with POC, search only in a range of ±90° is made with the template image being defined as the reference under the specifications of known RIPOC, and hence rotation by 180° does not have to be taken into consideration. Unlike the normal specifications, however, in a case of rotation exceeding 90°, reference is to be made to a reference document (Gerhard X. Ritter, Joseph N. Wilson, "Handbook of Computer Vision Algorithms in Image Algebra," 1996.5.1).

Depending on contents of template image 18 and image to be searched 16, a plurality of peaks thus appear. With known RIPOC, an amount of rotation corresponding to the highest peak is estimated as an amount of fluctuation by rotation. Therefore, when a plurality of peaks are generated, which peak indicates a truly correct amount of rotation cannot accurately be determined.

As described above, in the present embodiment, in order to exclude such a factor for lowering in robustness, with attention being paid to periodicity in a direction of rotation included in an image, a plurality of candidates for an amount of rotation are estimated in a stage of estimation of an amount of rotation.

Then, candidate generation portion 1568 of rotation amount estimation portion 156 shown in Fig. 5 estimates as a candidate for an amount of rotation, amount of rotation $\theta\pm$ (an amount of rotation based on period information) together with amount of rotation $\theta$ exhibiting the highest peak calculated with POC. As described above, for example, when period information is 90° and amount of rotation $\theta$ exhibiting the highest peak is -10°, two in total including amount of rotation $\theta$=80° (-10°+90°=80°) in addition to amount of rotation $\theta$=-10° are output as results of estimation. Then, the image to be searched is corrected in accordance with the results of estimation.

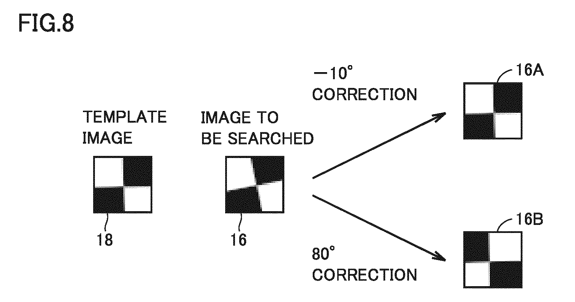

Fig. 8 is a diagram showing an exemplary result of rotation correction processing by rotation correction portion 154 of image processing apparatus 100 according to the first embodiment. As shown in Fig. 8, image to be searched 16 is corrected with a plurality of candidates for the amount of rotation based on an amount of fluctuation in direction of rotation between template image 18 and image to be searched 16 and on period information, and corrected images 16A and 16B are generated. Position search processing is performed with the use of corrected images 16A and 16B.

<<c3: Period Information»

Period information can be obtained with various methods. Typically, a frequency component (an amplitude component and a phase component) included in a template image is calculated, and period information may be determined based on periodicity of this frequency component. More specifically, in creating template image 18, a user can know what kind of periodicity there is, based on features of the image. Specifically, by extracting amplitude information by subjecting template image 18 to frequency conversion, an image like an image resulting from processing for conversion into logarithm shown in Fig. 5 can be obtained. By looking into such an image, the user can confirm what kind of periodicity the direction of rotation has.

After the user confirmed periodicity, the user can provide the periodicity to image processing apparatus 100 as period information. Namely, processing for obtaining information on periodicity includes processing for accepting information on periodicity set by the user at the time of generation of template image 18.

<<c4: Position Detection Processing>>

Details of the position detection processing described above will now be described.

As described above, in the present embodiment, the image to be searched is corrected with each of the plurality of candidates for the amount of rotation, and a position is detected with the use of each corrected image. Then, a most likely result among results of position detection is output as final position information.

In the example shown in Fig. 8 described above (when period information is 90° and amount of rotation $\theta$ exhibiting the highest peak is -10°, two amounts of rotation $\theta$ = -10° and 80° are output as the results of estimation of an amount of rotation), a result of position detection in the case of correction by amount of rotation $\theta$ = -10° and a result of position detection in the case of correction by amount of rotation $\theta$ = 80° are obtained.

Position detection portion 160 of image processing apparatus 100 shown in Fig. 3 determines which result of position detection is more likely, based on comparison of magnitude of the highest peak associated with these results of position detection.

As shown in Fig. 8, corrected images 16A and 16B are obtained by correcting image to be searched 16 with -10° and 80°. Since corrected image 16B obtained by correcting image to be searched 16 with 80° is different in view from template image 18, it has a smaller value for the highest peak and is highly likely to be determined to be low in accuracy in result of position detection. In contrast, since corrected image 16A obtained by correcting image to be searched 16 with -10° is substantially the same in view as template image 18, it has a greater value for the highest peak and a position can accurately be detected.

«c5: Processing Procedure»

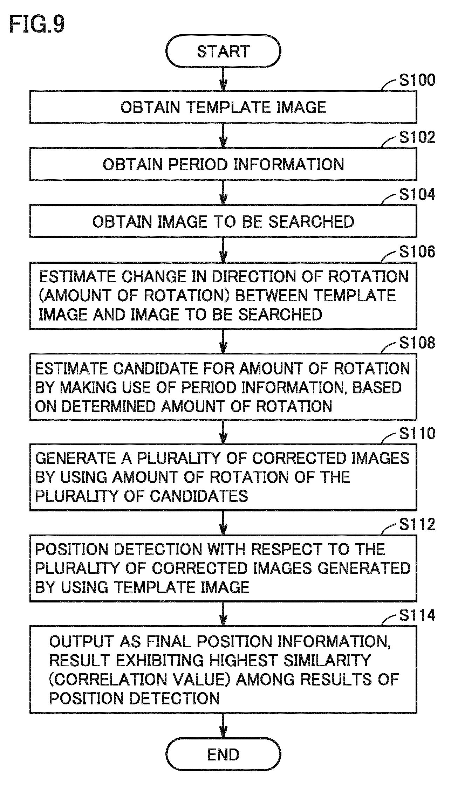

An overall procedure in the position detection processing according to the present embodiment will now be described. Fig. 9 is a flowchart showing an overall procedure in the position detection processing according to the first embodiment. Each step shown in Fig. 9 is typically implemented as CPU 102 executes template matching execution program 112 (both of which are in Fig. 2).

Referring to Fig. 9, initially, CPU 102 obtains a template image (step S100). The template image may be obtained by a user cutting a workpiece to serve as the reference from an image resulting from photographing by camera 10 or by obtaining an image generated based on design data for workpiece 2. In succession, CPU 102 obtains period information (step S102). This period information may externally be obtained in association with the template image, or may be set by the user based on image information included in the template image. In steps S100 and S102, information necessary for template matching according to the present embodiment is collected.

In succession, CPU 102 obtains an image to be searched (step S104). Typically, CPU 102 has camera 10 photograph workpiece 2 and obtains an image to be searched. Alternatively, an image obtained by photographing a workpiece with another camera may be taken in as an image to be searched. Processing in step S104 may be performed on condition that some kind of trigger occurs. For example, on condition that a sensor arranged in belt conveyor 3 has sensed arrival of workpiece 2, camera 10 may photograph workpiece 2.

In succession, CPU 102 estimates change in direction of rotation (amount of rotation) between the template image and the image to be searched (step S106). More specifically, as shown in Fig. 5, CPU 102 subjects each image to frequency conversion, processing for conversion into logarithm, and polar coordinate conversion, and then estimates an amount of rotation with POC. In estimation of this amount of rotation, CPU 102 determines an amount of rotation exhibiting the highest similarity (correlation value). Then, CPU 102 estimates a candidate for an amount of rotation by making use of period information, based on the amount of rotation determined in step S106 (step S108). More specifically, CPU 102 determines a candidate for the amount of rotation by adding/subtracting the amount of rotation representing period information to/from the amount of rotation estimated in step S106.

In succession, CPU 102 generates a plurality of corrected images by rotating image to be searched 16 with the plurality of candidate amounts of rotation (step S110). Then, CPU 102 detects a position with respect to each of the plurality of corrected images generated with the use of template image 18 (step S112). More specifically, CPU 102 typically searches for a corresponding position between the images with POC. Finally, CPU 102 outputs as final position information, a result representing the highest similarity (correlation value) among results of position detection in step S 112 (step S114). Namely, CPU 102 outputs as the final position information, a most likely result among results of position search which has been carried out with the use of the plurality of candidate amounts of rotation.

«c6: Advantages»

According to the present embodiment, even though an amount of rotation for correction by rotation cannot accurately be found, a plurality of candidates for the amount of rotation are estimated by making use of periodicity of the direction of rotation of the image and a position is detected with the use of each candidate. Then, position detection higher in robustness and accuracy can be realized by determining an optimal amount of rotation and a corresponding amount of position displacement based on a result of position detection.

[D. Second Embodiment]

In the first embodiment described above, in processing for estimating an amount of rotation, a POC value (similarity) is calculated by using respective amplitude components included in template image 18 and image to be searched 16, an amount of rotation exhibiting the highest peak is determined, and one candidate or a plurality of candidates for the amount of rotation is/are estimated based on period information, with the amount of rotation corresponding to the determined highest peak being defined as the reference. In processing for searching for a POC value (similarity) in this processing for estimating an amount of rotation, basically, a POC value (similarity) should be calculated for all amounts of rotation. On the other hand, when period information has been obtained, a period in which a peak appears can be expected in advance and hence a search range of a POC value (similarity) can be limited based on the period information.

In a second embodiment, processing for more efficiently performing processing for estimating an amount of rotation with the use of such period information will be described. Since a portion other than this processing for estimating an amount of rotation is the same as in the first embodiment described above, detailed description will not be repeated.

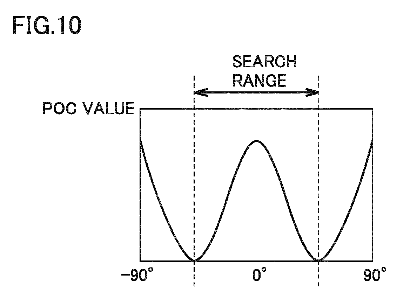

Fig. 10 is a diagram for illustrating processing for estimating an amount of rotation according to the second embodiment. Fig. 10 schematically and one-dimensionally shows change in POC value with respect to an amount of rotation. In an example shown in Fig. 10, peaks appear at three locations in total, at which amounts of rotation are 0°, -90°, and 90°, respectively.

Here, when period information has been known to be 90° in advance, a range of ±45° around 0° should only be searched. Namely, by searching the range of ±45° around 0°, a peak at the position of 0° can be specified. Then, with the specified position of 0° being defined as the reference, with the use of period information, it can be estimated that peaks are present at remaining positions of -90° and 90°.

In another example, when image to be searched 16 has rotated by 40° with respect to template image 18, peaks appear at two locations of 40° and -50°, and when the image to be searched has rotated by 60°, peaks appear at two locations of 60° and -30°. In any case, since at least one peak is present within the range of ±45° (search range) without exception, a peak can be searched for with the search range being limited.

In principle, when period information $\alpha$ has been obtained, the search range should only be limited to $\pm(\alpha/2)$. Naturally, in order to enhance robustness, a search range may be set to $\pm(\alpha/2+\beta)$ by using a likeliness $\beta$.

In the first embodiment described above, a POC value is calculated based on the amplitude information, a highest peak position in a POC value is searched for, and a plurality of candidates for an amount of rotation are estimated based on period information, with an amount of rotation corresponding to this found highest peak position being defined as the reference. In contrast, in the second embodiment, a range in which a peak position is searched for (a search range) is limited based on period information. Namely, in the second embodiment, matching (first matching) in respect to the direction of rotation between template image 18 and image to be searched 16 includes processing for limiting a range in which an amount of rotation is searched for, based on information on periodicity. Operation load can be lowered by adopting such processing for limiting a search range based on period information.

[E. Third Embodiment]

In the second embodiment described above, a configuration in which operation load is lowered by limiting a search range has been described. Limiting a search range, however, may lead to lowering in robustness. Therefore, in a third embodiment, processing for limiting a search range and improving robustness by making use of information out of the search range in processing for estimating an amount of rotation will be described. Since a portion other than this processing for estimating an amount of rotation is the same as in the first embodiment described above, detailed description will not be repeated.

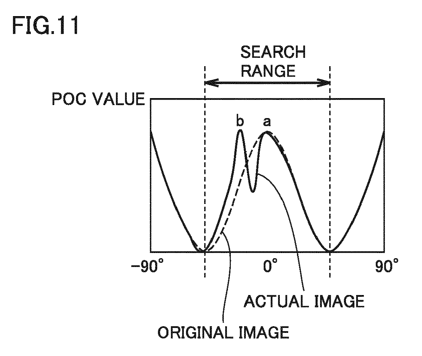

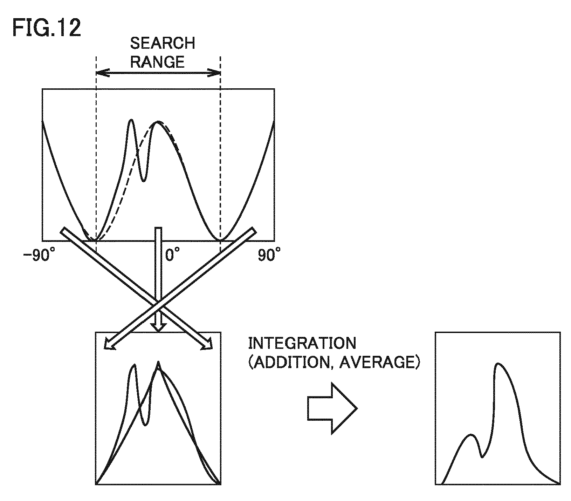

Fig. 11 is a diagram showing one example of variation in POC value with respect to an amount of rotation produced when an image contains a noise component. Fig. 12 is a diagram for illustrating processing for estimating an amount of rotation according to the third embodiment.

When some noise components (shot noise or shading) are produced in obtaining an image to be searched, as shown in Fig. 11, a peak (a false peak) may appear at an improper location (a position b in Fig. 11). In an example shown in Fig. 11, the highest peak should be produced at a position a. In such a case, when a peak which appears at position b indicates the highest peak, a candidate for an amount of rotation is determined based on period information, with an amount of rotation corresponding to position b being defined as the reference. Therefore, in position detection in a subsequent stage, a position is detected by using an image corrected with an erroneously estimated amount of rotation and an amount of rotation calculated with the use of period information based on the amount of rotation. Therefore, a position cannot accurately be detected.

In the example shown in Fig. 11, such erroneous detection may be caused even when a search range is limited to ±45°. Then, in the third embodiment, as shown in Fig. 12, influence on accuracy due to production of a false peak is eliminated by integrating a limited search range and information on a POC value out of the search range with each other. More specifically, characteristics (a waveform) of a POC value out of the search range are folded back and added and further averaged, to thereby lower an amplitude of the false peak which has appeared at position b in Fig. 11.

In the example shown in Fig. 12, at a correct peak position (0°), the peak is present also in a result of integration of information in the search range and out of the search range, however, at the false peak position, no peak is present in information out of the search range. By thus subjecting the POC value to integration processing (addition or averaging), an amplitude of the false peak can be lowered. Namely, an amount of rotation corresponding to the false peak can be prevented from being output as a result of estimation.

In the third embodiment, influence by a noise component can be reduced and robustness can be enhanced by limiting a search range based on period information and integrating information on a PCO value out of a search range with a search range. Namely, in the third embodiment, processing for limiting a range in which an amount of rotation is searched for includes processing for generating information on a similarity of a search range, by correcting relation between an amount of rotation and a similarity in a range in which an amount of rotation is searched for with relation between an amount of rotation and a similarity out of a range in which an amount of rotation is searched for.

[F. Fourth Embodiment]

In the third embodiment described above, processing for improving robustness by integrating information on a POC value in a search range with information on a POC value out of the search range has been described. In contrast, in a fourth embodiment, processing for excluding a false peak not with integration processing but with other processing will be described. Since a portion other than this processing for estimating an amount of rotation is the same as in the first embodiment described above, detailed description will not be repeated.

As described above, when some noise components (shot noise or shading) are produced in obtaining an image to be searched, a peak (a false peak) may appear at an improper location as shown in Fig. 11 (position b in Fig. 11).

Whether or not each peak has periodicity may be determined in order to determine whether a peak which appears in characteristics of a POC value is a proper peak or a false peak. In the example shown in Fig. 11, when the peak at position b in Fig. 11 exhibits the highest peak, a POC value at a position obtained by adding/subtracting a period (90° in this example) obtained based on period information (an amount of rotation at a peak position $\pm$ 90°), with an amount of rotation corresponding to this position b being defined as the reference, is evaluated. When a POC value at (an amount of rotation at a peak position $\pm$ 90°) is smaller than a predetermined threshold value, no periodicity is observed. Therefore, the peak which appears at position b can be determined as the false peak, which is excluded.

After the false peak which appears at position b is thus excluded, a peak having a next highest peak at a position other than position b is searched for. Whether or not the newly found peak has periodicity is also determined. When presence of periodicity is determined in this determination, a position of the peak and a position corresponding to period information are extracted as candidates for an amount of rotation. In a subsequent stage, processing for position detection is performed for each extracted candidate for an amount of rotation, and a most likely result (an amount of rotation and a corresponding position) is output as final position information.

In the fourth embodiment, whether or not an extracted peak is a false peak can be determined by determining whether or not periodic peaks are present, with an extracted amount of rotation representing the highest peak being defined as the reference. Namely, in the fourth embodiment, processing for excluding a candidate failing to satisfy a condition for information on periodicity among candidates for an amount of rotation by referring to characteristics in change in similarity between template image 18 and image to be searched 16 with respect to an amount of rotation is performed. By thus determining presence/absence of periodicity of extracted peaks, a false peak can be excluded and thus robustness can be improved.

[G. Fifth Embodiment]

In the first embodiment described above, an example in which a user obtains and sets period information has been described. A user would be able to know a pattern of a template image if it is a simple checker pattern as shown in Fig. 4. If a pattern is slightly complicated, however, it will be difficult to know what kind of periodicity the pattern has. Then, in a fifth embodiment, a configuration for automatically determining what kind of periodicity a template image has when a user sets a template image will be exemplified.

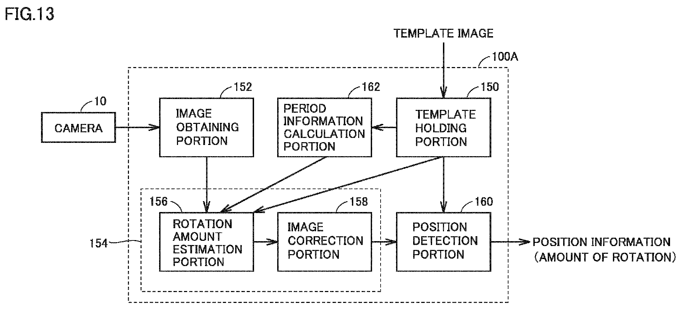

Fig. 13 is a schematic diagram showing a functional configuration of an image processing apparatus 100A according to the fifth embodiment. Referring to Fig. 13, image processing apparatus 100A according to the fifth embodiment additionally includes a period information calculation portion 162 as compared with image processing apparatus 100 shown in Fig. 3. Since other components have been described with reference to Fig. 3, detailed description will not be repeated.

Period information calculation portion 162 shown in Fig. 13 calculates period information of a template image with any method in first to third processing examples as will be described later.

<<g1: First Processing Example»

In a first processing example, period information calculation portion 162 estimates rotation between template images set by a user. Rotation between the template images is estimated off-line, that is, before an image to be searched is subjected to position search processing.

Since a plurality of peaks appear in a template image having some kind of periodicity in accordance with the periodicity, periodicity included in the template image can be extracted based on these peaks. More specifically, period information can be calculated by extracting a peak of which peak value (amplitude) exceeds a predetermined threshold value among a plurality of peaks which have appeared and determining at which pixel interval the extracted peaks have been produced.

For example, when a template has a size of 128 pixels x 128 pixels, one pixel corresponds to 1.4° (a case that the entire template size is 180°). Therefore, by way of example, when a pixel interval at which peaks appear is 32 pixels, period information is 32 pixels x 1.4°≈ 45°. Since it can be known that period information of the template image is 45° through such processing, an amount of rotation can be estimated taking into account this period information as described in the embodiment described above.

When rotation between exactly identical template images is estimated, a sharp peak is output only at the center of the image as a POC value and it becomes difficult to calculate period information. Therefore, some error is preferably produced between template images to be subjected to estimation of rotation. For example, a method of providing some noise such as random noise to any one template image or a method of deteriorating one template image with a smoothing filter may be adopted as a method of producing such an error.

«g2: Second Processing Example»

In a second processing example, period information calculation portion 162 calculates a correlation value between a template image and an image generated by rotation of the template image and thus calculates periodicity of the template image.

More specifically, period information calculation portion 162 generates a plurality of images obtained by rotating a template image set by a user by each prescribed angle (for example, by each 1°). This image generation processing is performed off-line. Then, period information calculation portion 162 calculates a correlation value for each image by using the template image set by the user and carrying out position detection matching with a plurality of images generated by rotation by each prescribed angle. A correlation value calculated for each image fluctuates in accordance with periodicity thereof Namely, a higher degree of matching is exhibited in accordance with periodicity. Then, period information can be determined by calculating at which rotation amount interval peaks are produced based on data on a correlation value exceeding a predetermined threshold value among calculated correlation values.

<<g3: Third Processing Example>>

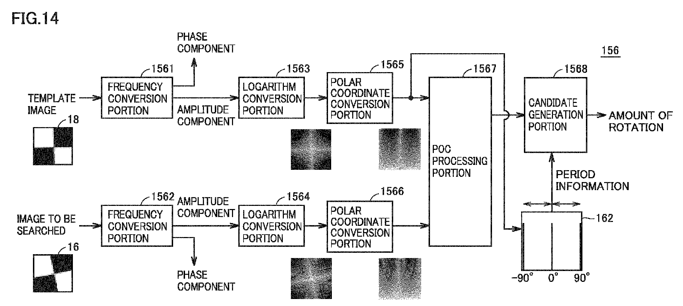

Fig. 14 is a more detailed functional block diagram of rotation amount estimation portion 156 and period information calculation portion 162 of the image processing apparatus according to the third processing example in the fifth embodiment. Referring to Fig. 14, period information calculation portion 162 subjects an image resulting from polar coordinate conversion of amplitude information of a template image (an image resulting from polar coordinate conversion) to frequency conversion (typically, Fourier transform) in a direction of axis representing an amount of rotation (the abscissa in the image resulting from polar coordinate conversion shown in Fig. 14), so that a peak of a frequency corresponding to periodicity becomes high. Period information is obtained by making use of this property.

<<g4: Advantages>>

In the fifth embodiment, processing for obtaining information on periodicity includes processing for matching (third matching) in respect to a direction of rotation between template images 18 and processing for determining periodicity based on a period of a similarity which appears in a result of matching. According to such fifth embodiment, once a user sets a template image, the user himself/herself does not have to set information on periodicity of the set template image. Namely, since periodicity of the set template image is automatically analyzed, a system achieving enhanced usability can be realized.

<<g5: Others>>

As described above, in addition to or instead of information on automatically determined periodicity, a user may arbitrarily make setting. Namely, processing for obtaining information on periodicity may include processing for accepting information on any periodicity from a user.

[H. Sixth Embodiment]

In the first embodiment described above, though only an amount of rotation at the highest peak is found at the time of estimation of an amount of rotation and a plurality of amounts of rotation are estimated based on period information, another processing method may be adopted. In a sixth embodiment, variation of the processing for estimating an amount of rotation will be described. Since a portion other than this processing for estimating an amount of rotation is the same as in the first embodiment described above, detailed description will not be repeated.

For example, in estimating an amount of rotation, a peak position having an amplitude equal to or greater than a predetermined threshold value may be calculated and a periodic position with respect to each peak position may also be calculated. In this case, a large number of candidates for an amount of rotation are present, which may lead to higher operation load. Since unstable amplitude information such as variation in illumination environment is used in estimation of an amount of rotation, a rate of error in estimation of an amount of rotation may increase. In position detection in a subsequent stage, however, by making use of robust POC for such an error factor as variation in illumination environment, a result of position detection having a high correlation value only for an image of which amount of rotation has properly been corrected can be obtained.

According to the sixth embodiment, robust detection can be achieved by detecting a position in a subsequent stage of a plurality of candidates for an amount of rotation.

[I. Seventh Embodiment]

In the first embodiment described above, though only an amount of rotation at the highest peak is found in estimation of an amount of rotation and a plurality of amounts of rotation are estimated based on period information, another processing method may be adopted. In a seventh embodiment, a further variation of the processing for estimating an amount of rotation will be described. Since a portion other than this processing for estimating an amount of rotation is the same as in the first embodiment described above, detailed description will not be repeated.

For example, during estimation of an amount of rotation, a plurality of peak positions having an amplitude equal to or greater than a predetermined threshold value are calculated and whether or not the plurality of calculated peak positions have periodic relation is determined.

When there is no periodic relation, that peak position is excluded, then a candidate for an amount of rotation is determined, and a position is detected in a subsequent stage. This processing means calculation of a highest peak position matching with period information.

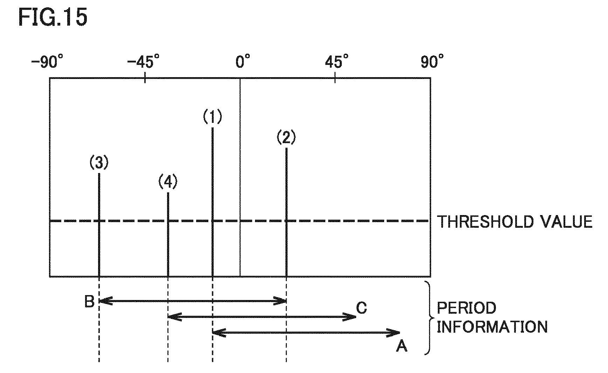

Fig. 15 is a diagram for illustrating processing for estimating an amount of rotation according to the seventh embodiment. A highest peak value is exhibited at a peak (1) shown in Fig. 15, and peak values exceeding a predetermined threshold value (a horizontal dashed line) are exhibited at peaks (2) to (4).

In the seventh embodiment, peaks (1) to (4) shown in Fig. 15 are extracted as candidates for estimating an amount of rotation. Then, certainty of that peak is determined by making use of period information successively from the highest peak. Certainty does not necessarily have to be determined successively from the highest peak, and the order is arbitrary. For example, determination may be made successively from a peak located on the left shown in Fig. 15 or from a peak located on the right.

Period information A (assumed to be 90° here by way of example; a length corresponding to 90° is shown with an arrow in Fig. 15) is made use of for peak (1), and whether or not a peak as exceeding a threshold value is present at a corresponding position is determined. Since there is no peak at a position distant by 90° from peak (1) in the example shown in Fig. 15, peak (1) is excluded from candidates.

Then, period information B (also assumed to be 90° here) is made use of for peak (2), and whether or not a peak as exceeding a threshold value is present at a corresponding position is determined. Since peak (3) is present at a position distant by exactly 90° from peak (2) in the example shown in Fig. 15, peak (2) is left as being likely as a candidate.

Then, since peak (3) has previously been found to be paired with peak (2), it is not necessary to make determination again by making use of period information, and determination processing for peak (3) is skipped, with peak (3) being left as a candidate.

Finally, determination is similarly made for peak (4). Since there is no peak at a position distant by exactly 90° from peak (4) in this example, peak (4) is excluded from candidates.

By adopting a technique as shown in the seventh embodiment as described above, even when a highest peak position appears at an essentially erroneous amount of rotation, such an erroneous amount of rotation can be excluded by making use of period information. Therefore, a candidate for an amount of rotation can be estimated with enhanced robustness. Then, since the most likely amount of rotation and position among candidates for an amount of rotation which have periodic relation can be calculated based on a result of position detection in a subsequent stage, robustness can further be enhanced.

In the example described above, certainty of all peaks (except for a peak paired with another peak like peak (3)) exceeding a predetermined threshold value may be determined, or certainty may be determined successively from a peak higher in peak value and then a remaining peak may be excluded at the time point when even a single peak matching with period information is found. By adopting such processing, an estimation candidate for a most likely amount of rotation having period information can be determined and a time period for operation can also be shortened.

[J. Other Embodiments]

Though a processing example in which POC is made use of as a technique for detecting a position has been described in the first to seventh embodiments described above, any technique capable of position detection between images may be adopted. For example, a technique capable of position detection like sum of absolute difference (SAD) can be adopted. SAD is a method of evaluating a similarity by calculating an absolute value sum of differences for each pixel between a template image and an image to be searched.

Since an amount of rotation of a template image is optimized in processing for correcting an amount of rotation in the present embodiment, even a technique slightly low in robustness can also be made use of if only a final candidate is narrowed down. On the other hand, since SAD is lower in operation load than POC, processing can be faster.

A similar effect can be obtained also by using other techniques such as sum of squared difference (SSD) or normalize cross correlation (NCC), limited to SAD.

[K. Additional Aspects]

The present embodiment includes aspects as below.

An image processing apparatus includes means for obtaining a template image and an image to be searched, means for obtaining periodicity in respect to a direction of rotation of amplitude information of the obtained image, means for estimating a plurality of relative amounts of rotation by making use of the amplitude information and periodicity of the template image and the image to be searched, means for correcting the relative amount of rotation between the template image and the image to be searched, means for detecting from each corrected image, a position highest in correlation value in template matching as a position of an object in the image to be searched, and means for selecting a position having the highest correlation value from among detected positions.

Preferably, the image processing apparatus includes means for limiting a search range for estimating a relative amount of rotation based on information on periodicity, means for estimating a relative amount of rotation from the limited search range, and means for estimating a plurality of relative amounts of rotation based on the estimated relative amount of rotation and the information on periodicity.

Further preferably, the image processing apparatus includes means for integrating a correlation value in the limited search range and a correlation value out of the search range with each other.

Preferably, the image processing apparatus includes means for excluding from a result of estimation, an amount of rotation which does not match with the information on periodicity, with respect to the plurality of estimated relative amounts of rotation.

Preferably, the means for obtaining periodicity is set by a user when a template is created.

Preferably, the means for obtaining periodicity performs processing for estimating an amount of rotation between templates set by the user and calculates periodicity based on the obtained correlation value.

[L. Advantages]

According to the present embodiment, in a technique for detecting a position in consideration of rotation of an image, in estimating an amount of rotation which is first calculated, influence by a peak which does not match with periodicity is reduced by making use of periodicity in a direction of rotation of the image, and robustness can be improved and operation load can be lowered by limiting a search range.

Namely, in an algorithm in which an amount of displacement in direction of rotation is first estimated and thereafter a position is searched for as in RIPOC, initial estimation of an amount of displacement in direction of rotation is important. In particular, when amplitude information of an image has periodicity in a direction of rotation, which amount of rotation represents a correct amount of displacement cannot accurately be determined and therefore an erroneous amount of rotation can be estimated. An amount of rotation irrelevant to periodicity can be estimated due to influence by noise in an image. Therefore, in a technique for detecting a position in consideration of a direction of rotation of an image, robustness and accuracy in estimation of an amount of rotation which is first calculated can be enhanced by making use of periodicity in a direction of rotation of the image.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

REFERENCE SIGNS LIST

1 system; 2 workpiece; 3 belt conveyor; 10 camera; 16 image to be searched; 16A, 16B corrected image; 18 template image; 100, 100A image processing apparatus; 102 CPU; 104 RAM; 106 ROM; 108 network interface; 110 hard disk; 112 template matching execution program; 120 display portion; 122 input portion; 124 memory card interface; 126 memory card; 128 camera interface; 130 bus; 150 template holding portion; 152 image obtaining portion; 154 rotation correction portion; 156 rotation amount estimation portion; 158 image correction portion; 160 position detection portion; 162 period information calculation portion; 1561, 1562, 1573, 1574 frequency conversion portion; 1563, 1563, 1564, 1564 logarithm conversion portion; 1565, 1565, 1566, 1566 polar coordinate conversion portion; 1567 POC processing portion; 1568 candidate generation portion; 1571 reference window setting portion; 1572 target window setting portion; 1575, 1576 phase information extraction portion; 1577 phase difference calculation portion; and 1578 frequency inverse conversion portion.

**Claims**

1. An image processing method of carrying out template matching with an image to be searched by using a template image, comprising the steps of:

    obtaining information on periodicity in a direction of rotation, of at least one of the template image and the image to be searched;
    carrying out first matching in respect to the direction of rotation between the template image and the image to be searched and determining a plurality of candidates for an amount of rotation for correcting relative displacement in direction of rotation between the template image and the image to be searched based on a result of the first matching and the information on the periodicity;
    generating a plurality of sets of images resulting from correction of relative displacement in the direction of rotation between the template image and the image to be searched with each of the candidates for the amount of rotation; and
    carrying out second matching in respect to a position in each of the sets of the images and outputting a result relatively high in likelihood among results of the second matching.

2. The image processing method according to claim 1, wherein
the step of determining the plurality of candidates for an amount of rotation includes the step of limiting a range in which the amount of rotation is searched for based on the information on the periodicity.

3. The image processing method according to claim 2, wherein
the step of limiting the range in which the amount of rotation is searched for includes the step of generating information on similarity in the range in which the amount of rotation is searched for, by correcting relation between the amount of rotation and the similarity in the range in which the amount of rotation is searched for with relation between an amount of rotation and similarity out of the range in which the amount of rotation is searched for.

4. The image processing method according to any one of claims 1 to 3, wherein
the step of determining the plurality of candidates for an amount of rotation includes the step of determining candidates for the amount of rotation by adding and/or subtracting an amount of rotation representing the information on the periodicity to and/or from an amount of rotation determined in the first matching.

5. The image processing method according to any one of claims 1 to 4, wherein
the step of determining the plurality of candidates for an amount of rotation includes the step of excluding a candidate failing to satisfy a condition for the information on the periodicity from the candidates for the amount of rotation, by referring to characteristics of change in similarity between the template image and the image to be searched, with respect to the amount of rotation.

6. The image processing method according to any one of claims 1 to 5, wherein the step of obtaining information on periodicity includes the step of accepting the information on the periodicity specified by a user when the template image is generated.

7. The image processing method according to any one of claims 1 to 5, wherein the step of obtaining information on periodicity includes the steps of

carrying out third matching in respect to the direction of rotation between the template images, and

determining periodicity based on a period of similarity which appears in a result of the third matching.

8. The image processing method according to any one of claims 1 to 5, wherein the step of obtaining information on periodicity includes the step of accepting information on any periodicity from a user.

9. An image processing apparatus carrying out template matching with an image to be searched by using a template image, comprising:

a period information obtaining portion that obtains information on periodicity in a direction of rotation, of at least one of the template image and the image to be searched;

a rotation amount estimation portion that carries out first matching in respect to the direction of rotation between the template image and the image to be searched and determines a plurality of candidates for an amount of rotation for correcting relative displacement in direction of rotation between the template image and the image to be searched based on a result of the first matching and the information on the periodicity;

an image correction portion that generates a plurality of sets of images resulting from correction of relative displacement in the direction of rotation between the template image and the image to be searched with each of the candidates for the amount of rotation; and

a position detection portion that carries out second matching in respect to a position in each of the sets of the images and outputs a result relatively high in likelihood among results of the second matching.

10. An image processing program carrying out template matching with an image to be searched by using a template image, causing a computer to perform the steps of:

obtaining information on periodicity in a direction of rotation, of at least one of the template image and the image to be searched;

carrying out first matching in respect to the direction of rotation between the template image and the image to be searched and determining a plurality of candidates for an amount of rotation for correcting relative displacement in direction of rotation between the template image and the image to be searched based on a result of the first matching and the information on the periodicity;

generating a plurality of sets of images resulting from correction of relative displacement in the direction of rotation between the template image and the image to be searched with each of the candidates for the amount of rotation; and

carrying out second matching in respect to a position in each of the sets of the images and outputting a result relatively high in likelihood among results of the second matching.

FIG.1

POSITION
INFORMATION
(AMOUNT OF
ROTATION)

FIG.2

FIG.3

TEMPLATE IMAGE18

FIG.4

TEMPLATE IMAGE
18

IMAGE TO BE
SEARCHED
16

PERIOD INFORMATION

16A

−10° CORRECTION        80° CORRECTION

16B

MATCHING

PEAK POSITION

POSITION DETECTION        POSITION DETECTION

POC VALUE                30

PERIOD
INFORMATION

−90°        −10°  0°        90°

AMOUNT OF ROTATION

FIG.5

PHASE
COMPONENT

TEMPLATE IMAGE — FREQUENCY CONVERSION PORTION (1561) — AMPLITUDE COMPONENT → LOGARITHM CONVERSION PORTION (1563) → POLAR COORDINATE CONVERSION PORTION (1565) → POC PROCESSING PORTION (1567) → CANDIDATE GENERATION PORTION (1568) → AMOUNT OF ROTATION

IMAGE TO BE SEARCHED — FREQUENCY CONVERSION PORTION (1562) — AMPLITUDE COMPONENT → LOGARITHM CONVERSION PORTION (1564) → POLAR COORDINATE CONVERSION PORTION (1566)

PHASE COMPONENT

PERIOD INFORMATION

156

FIG.6

INFORMATION ON
SIZE OF REGION

1567

┌─────────── 1571 ─────── 1573 ─────── 1575 ──────────────────────────────────────────────────────
│
TEMPLATE ──────→ REFERENCE        FREQUENCY       PHASE
IMAGE            WINDOW     ────→  CONVERSION ───→ INFORMATION
                 SETTING           PORTION         EXTRACTION
                 PORTION                           PORTION
                                                                    1577              1578
                    1572              1574             1576
                                                                PHASE           FREQUENCY
IMAGE TO BE ────→ TARGET           FREQUENCY       PHASE        DIFFERENCE      INVERSE          POC
SEARCHED          WINDOW     ────→ CONVERSION ───→ INFORMATION  CALCULATION ──→ CONVERSION ────→ VALUE
                  SETTING          PORTION         EXTRACTION   PORTION         PORTION
                  PORTION                          PORTION

INFORMATION ON
SIZE OF REGION

# FIG.7

TEMPLATE IMAGE
(AFTER POLAR
COORDINATE
CONVERSION)

IMAGE TO BE
SEARCHED
(AFTER POLAR
COORDINATE
CONVERSION)

PEAK VALUE···SIMILARITY BETWEEN
IMAGES
PEAK POSITION···AMOUNT OF PARALLEL
TRANSLATION BETWEEN
IMAGES

POC VALUE $\hat{r}(n_1, n_2)$

FIG.8

TEMPLATE
IMAGE

IMAGE TO
BE SEARCHED

−10°
CORRECTION

80°
CORRECTION

18

16

16A

16B

## FIG.9

START

↓ S100

OBTAIN TEMPLATE IMAGE

↓ S102

OBTAIN PERIOD INFORMATION

↓ S104

OBTAIN IMAGE TO BE SEARCHED

↓ S106

ESTIMATE CHANGE IN DIRECTION OF ROTATION (AMOUNT OF ROTATION) BETWEEN TEMPLATE IMAGE AND IMAGE TO BE SEARCHED

↓ S108

ESTIMATE CANDIDATE FOR AMOUNT OF ROTATION BY MAKING USE OF PERIOD INFORMATION, BASED ON DETERMINED AMOUNT OF ROTATION

↓ S110

GENERATE A PLURALITY OF CORRECTED IMAGES BY USING AMOUNT OF ROTATION OF THE PLURALITY OF CANDIDATES

↓ S112

POSITION DETECTION WITH RESPECT TO THE PLURALITY OF CORRECTED IMAGES GENERATED BY USING TEMPLATE IMAGE

↓ S114

OUTPUT AS FINAL POSITION INFORMATION, RESULT EXHIBITING HIGHEST SIMILARITY (CORRELATION VALUE) AMONG RESULTS OF POSITION DETECTION

↓

END

## FIG.10

FIG.11

FIG.12

SEARCH
RANGE

−90°    0°    90°

INTEGRATION
(ADDITION, AVERAGE)

FIG.13

TEMPLATE IMAGE

100A

| CAMERA (10) | → | IMAGE OBTAINING PORTION (152) | | PERIOD INFORMATION CALCULATION PORTION (162) | | TEMPLATE HOLDING PORTION (150) |

154
156 — ROTATION AMOUNT ESTIMATION PORTION → IMAGE CORRECTION PORTION (158) → POSITION DETECTION PORTION (160) → POSITION INFORMATION (AMOUNT OF ROTATION)

FIG.14

PHASE
COMPONENT

TEMPLATE
IMAGE
18

FREQUENCY
CONVERSION
PORTION
1561

AMPLITUDE
COMPONENT

LOGARITHM
CONVERSION
PORTION
1563

POLAR
COORDINATE
CONVERSION
PORTION
1565

POC
PROCESSING
PORTION
1567

CANDIDATE
GENERATION
PORTION
1568

156

AMOUNT OF
ROTATION

PERIOD
INFORMATION

IMAGE TO BE
SEARCHED
16

FREQUENCY
CONVERSION
PORTION
1562

AMPLITUDE
COMPONENT

LOGARITHM
CONVERSION
PORTION
1564

POLAR
COORDINATE
CONVERSION
PORTION
1566

PHASE
COMPONENT

−90°   0°   90°

162

FIG.15

## INTERNATIONAL SEARCH REPORT

| | International application No. |
|---|---|
| | PCT/JP2014/064066 |

**A. CLASSIFICATION OF SUBJECT MATTER**
*G06T7/00(2006.01)i*

According to International Patent Classification (IPC) or to both national classification and IPC

**B. FIELDS SEARCHED**

Minimum documentation searched (classification system followed by classification symbols)
G06T7/00

Documentation searched other than minimum documentation to the extent that such documents are included in the fields searched
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 10-206134 A (Matsushita Electric Works, Ltd.), 07 August 1998 (07.08.1998), entire text; all drawings & US 6185343 B1 & EP 854436 A2 & DE 69831519 D & DE 69831519 T & SG 77157 A & CN 1193729 A | 1-10 |
| A | JP 10-124667 A (Yamatake-Honeywell Co., Ltd.), 15 May 1998 (15.05.1998), entire text; all drawings & US 6094499 A & EP 827103 A2 & DE 69729357 D & DE 69729357 T & KR 10-0240295 B & CN 1177781 A | 1-10 |

| ☒ Further documents are listed in the continuation of Box C. | ☐ See patent family annex. |

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 15 August, 2014 (15.08.14) | 26 August, 2014 (26.08.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2014/064066 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-69084 A (Hitachi High-Technologies Corp.), 05 April 2012 (05.04.2012), paragraphs [0089] to [0098]; fig. 14 (Family: none) | 1-10 |
| A | Koji KOBAYASHI et al., "Filtering on Phase Only Correlation Domain and its Applications", ITE Technical Report, 22 July 1997 (22.07.1997), vol.21, no.42, pages 31 to 36 | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10124667 A

- JP 10206134 A

**Non-patent literature cited in the description**

- **GERHARD X. RITTER ; JOSEPH N. WILSON.** Handbook of Computer Vision Algorithms in Image Algebra. 01 May 1996